# EUROPEAN PATENT SPECIFICATION

(11) **EP 1 790 432 B1**
(45) Date of publication and mention of the grant of the patent: **08.01.2014**
(21) Application number: 05111379.3
(22) Date of filing: 28.11.2005
(51) Int. Cl.: B23Q 11/00, B23D 59/00, B23D 49/16

(54) **Power toll such as jig saw having means for removing cutting debris from workpiece**
Kraftwerkzeug wie Stichsäge ausgerüstet mit Mitteln für das Entfernen der Späne vom Werstück
Outil motorisé tel que scie sauteuse pourvu de moyens pour dégager les débris de coupe d'une pièce

(43) Date of publication of application: 30.05.2007
(73) Proprietor: Black & Decker, Inc., Newark, DE 19711 (US)
(72) Inventor: BONE, Graham, DH1 1LY, Durham (GB)
(74) Representative: Clark, Charles Robert

(56) References cited:
- WO-A-2005/072921
- DE-U1- 7 919 565
- DE-U1- 20 310 902
- US-A- 5 084 971
- US-A1- 2005 160 608

## Description

### Technical field

This invention relates to an electronically powered manually operated tool according to the preamble of claim 1. Such a tool is known from US2005/0160608. The invention is described below with reference to electrically powered hand operated jigsaws. However, it is to be understood that the invention is not limited to jigsaws and could equally find application in other types of power tools, such as sabre saws, circular saws or the like.

### Background art

Jigsaws are well known in the field of electrically powered cutting tools. A saw blade is caused to reciprocate such that a work-piece is cut by the blade's action. Debris from the work-piece is thrown by the cutting blade onto work-piece. This debris can obscure to some extent the intended line of cut. As a result, an operator of the jigsaw has to blow or brush the debris off the work-piece before they can proceed with cutting the work-piece along the cut-line.

This problem has been partially addressed by providing a flow of air to the area of the work-piece close to where the saw blade engages the work-piece.

DE 10338602 describes a jigsaw having airflow paths arranged such that a portion of air drawn into the body of the jigsaw by a fan on a drive motor is expelled from a nozzle disposed immediately behind the saw blade. Thus, the expelled air blows debris forward of the blade.

Likewise, DE 3717585 describes a jigsaw having airflow paths arranged in the body of the saw such that air propelled by a motor fan is blown towards an area of the work-piece coincident with the point where the saw blade exits the work-piece.

The prior art devices discussed above only partially solve the problem of clearing debris from the intended direction along which the saw is cutting. The debris is blown forward of the saw, but some debris remains on the cut line, especially when the cut line is straight.

WO 2004080635 describes a jigsaw arranged to drive air via a connecting piece and bridge member towards a jigsaw blade in a direction transverse to a line of cutting action. A suction tube is provided, which can be attached to a vacuum cleaner, on an opposite side of the blade to the bridge member. This arrangement is relatively complex and requires a portion of the connecting piece to be moveable with respect to the bridge member when the angle of the cut is bevelled, that is, when the blade is not perpendicular to a top surface of the work-piece.
DE 7919565U1 describes a jigsaw having an attachment consisting of a half-cup shaped piece of channel clamped to the motor housing of the jigsaw so as to overlap the cooling air outlet openings of the tool. A nozzle is formed in the end portion of the channel piece and is directed at the saw mechanism. Cooling air flows around the motor, through the outlet openings into the piece of channel and out through the nozzle. DE20310902U1 describes a device for a compass saw, the device having a rectangular rubber box which fits over exit louvers on the side of the saw housing to collect cooling air and direct it through a pipe to blow air onto the cutting region of the saw.
US 5084971 describes a sawdust blower attachment for a power saw. Sawdust created by the power saw's cutting acting is blown away from the line of cut by streams of air carried by conduits extending from a plenum which receives air from the fan on the saw motor's rotor.

### Disclosure of the invention

The present invention aims to ameliorate the prior art devices by providing a simplified debris blower on a power tool which suffers less from the problems associated with known debris blower arrangements. US 2005/0160608 discloses a tool according to the preamble of claim 1.

According to the present invention, there is provided an electrically powered manually operated tool comprising the features of claim 1.

Further preferred embodiments are defined by the features of dependent claims 2-5.

An embodiment of the present invention is now described by way of example, with reference to the accompanying drawings described below.

### Brief description of the drawings

Figure 1 is a schematic view of a jigsaw embodying the present invention;

Figure 2 is a view of the jigsaw shown in figure 1 from a front perspective; and

Figure 3 is a schematic detailed view showing components of the jigsaw shown in figure 2.

### Mode(s) for carrying out the invention

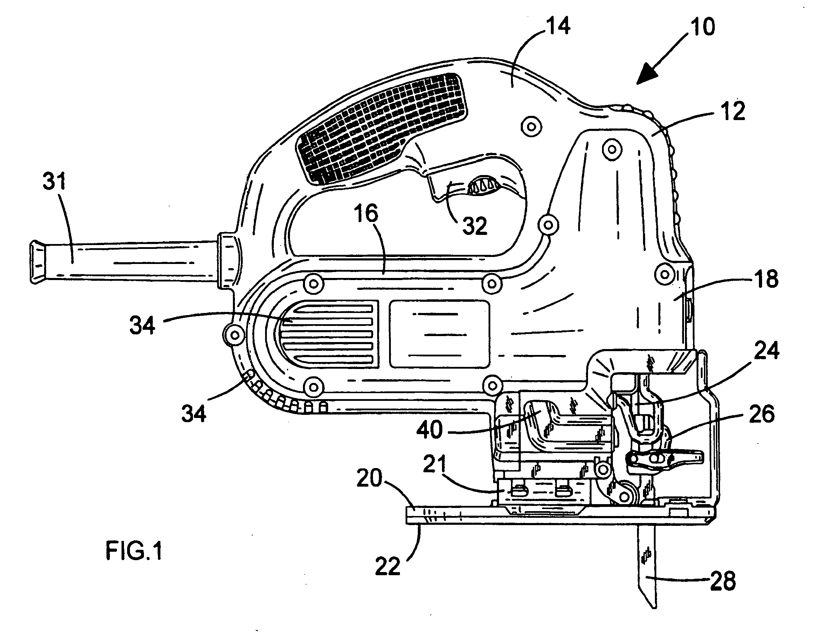

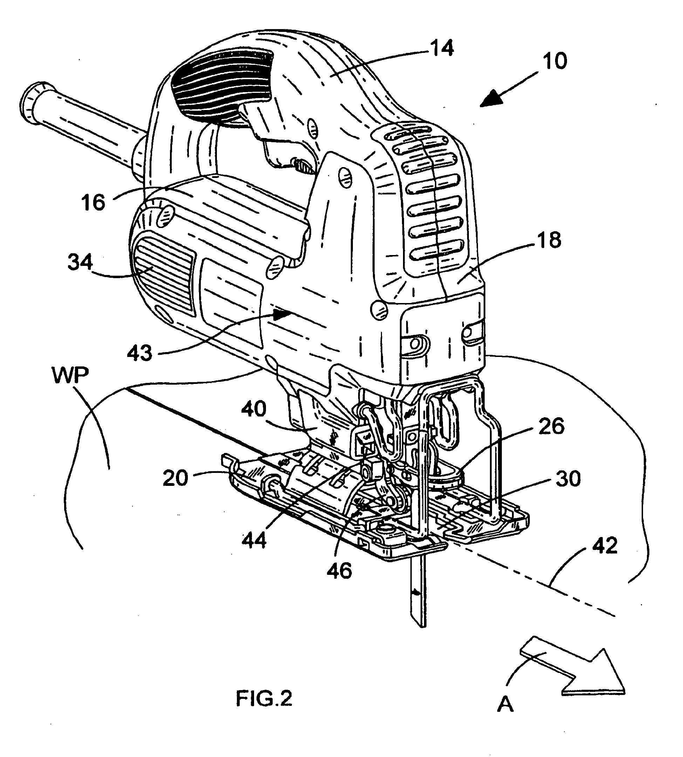

Referring to figure 1, a jigsaw 10 embodying the present invention is shown. The jigsaw comprises a body 12, having a handle portion 14, a motor housing portion 16 and a gearbox portion 18. A base plate 20 is coupled to the housing by a bridge component 21 and comprises an underside surface 22 which is arranged to engage with a top surface of a work-piece during use. A reciprocating shaft 24 extends from the gearbox portion of the housing and comprises a blade clamp 26 at one end of the shaft. A saw blade 28 is disposed in the blade clamp such that the blade extends through an aperture 30 (see figure 2) in the base plate. During use, the blade is in engagement with the work-piece, as is understood by the skilled person.

A motor is housed in the motor housing portion 16 of the body 12. The motor is coupled to a gearbox disposed in the gearbox portion 18 of the body12. Electrical power is supplied to the motor via a cord 31. Of course, electrical powered could also be supplied by batteries. A manually operable switch 32 is provided to allow an operator to interrupt electrical power to the motor. Power is supplied to the motor by depressing the switch into handle portion 14. When activated by the switch, rotorary motion of the motor is converted to linear reciprocating motion by the gearbox. The reciprocating shaft, and hence the blade coupled thereto, therefore move in a linear manner and perpendicular to the plain defined by the base plate.

A fan is coupled to the motor and disposed between the motor and gearbox such that operation of the motor causes the fan to rotate. Rotation of the fan causes air to be drawn into the motor housing portion of the body through louvered slots 34. Having entered the body of the jigsaw, the air passes over the motor to cool components of the motor during use. The air then enters a volume surrounding the fan. Rotation of the fan causes the air to in the volume to exit the volume via an exit conduit 40.

Referring to figure 2, the jigsaw is shown disposed on a work-piece WP. The broken line 42 indicates the intended line along which the jigsaw is cutting, and arrow A indicates the cut direction. The work-piece is cut by the jigsaw in this manner.

The exit conduit 40 is disposed on a side face 43 of the jigsaw body. The conduit extends from the fan volume inside the body to a point where the conduit then forms an enclosed channel on the outer surface of the body. An outlet 44 of the conduit is formed such that an air stream exiting the conduit is directed towards a portion of the work-piece close to the point where the saw blade passes through the top surface of the work-piece. Preferably, the outlet is disposed close to the point where the body is coupled to the base plate 20. Thus, the direction of the air flow in the air stream is off-axis with respect to the line of cut 42. In other words, the air stream is angled with respect to the cut line 42 (the word "angled" being taken to mean that the air stream, or at least a component of the air stream in the plain of the work-piece, is neither parallel with or perpendicular to the cut line).

Debris is thrown onto the top surface of the work-piece as the saw blade cuts through the work-piece. The air stream exiting the outlet 44 blows the debris away from area of work-piece being cut. Furthermore, because the air stream is angled with respect to the cut line 42, the debris is blown away from the cut line thereby keeping the cut line visible to the operator during use. Yet further, the air stream intercepting the debris is not interrupted by components of the jigsaw mechanism, such as a bell crank 46 used to impart pendulum motion on the saw blade during use. In other words, there is a clear line of sight between the outlet and the point on the work-piece where debris is ejected by the action of the saw blade.

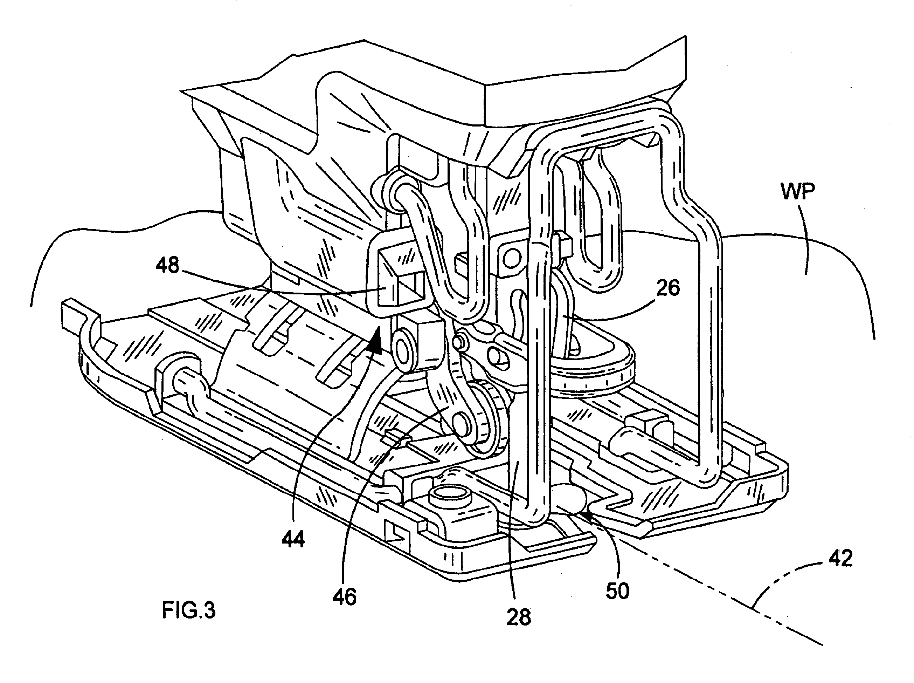

Referring to figure 3, a portion of the jigsaw embodying the present invention is shown in more detail. The outlet 44 comprises a nozzle member 48. The nozzle is arranged to direct the air stream passing through the outlet towards the area 50 of the work-piece WP where debris is ejected and may land or settle on the work-piece. This area 50 is within a 5-10 millimetres radius of the point where the cutting edge of the saw blade 28 engages with the work-piece. It can be seen that the air stream exiting the outlet and being directed by the nozzle is uninterrupted by components of the jigsaw on its path towards the work-piece area 50. It might be that the blade clamp 26 partially enters the air stream, but because of the clamps reciprocating motion, the air stream is only blocked or partially blocked for short periods of time.

As a result of the foregoing, it is possible to provide a simple and more compact arrangement for a jigsaw. The designer is no longer concerned with having to implement relatively complex arrangements of conduits or pipes from the motor fan to direct air to the work-piece. Furthermore, the bell crank and other jigsaw components can be located in positions which are more optimal to their operation without the need to compromise because of the need to provide sufficient airflow to the work-piece for the removal of debris therefrom. Yet further, angling the air flow with respect to the cut line 42 removes the debris from the cut line thereby improving the visibility of the cut line during use.

The jigsaw can be arranged such that all the air moved by the rotation of the fan passes through the outlet. In other words, the outlet is the only means by which air from the fan is able to be exhausted from the jigsaw's body.

The skilled person will envisage modifications to the embodiment of the present invention described above. For instance, the angle at which the air stream exits the outlet with respect to the cut line could be arranged to be within 10° to 80° of the cut line in horizontal plane.

## Claims

1. An electrically powered manually operated tool (10), comprising
a motor for driving an output shaft (24) to which a saw blade (28) can be coupled,
a housing (16) for housing the motor,
a base plate (20) attached to the housing (16), said base plate (20) comprising a surface (22) arranged to contact a work-piece (WP) during use, and
an aperture (30) through which the saw blade (28) can pass to engage the work-piece (WP),
a fan arranged to be driven by the motor to provide a stream of air, and
an outlet (44) through which a portion of the stream of air can pass, the outlet (44) being in fluid communication with the fan via a conduit (40);
wherein said outlet (44) is disposed on the housing (16) so as to direct the stream of air during use at a portion of the work-piece (WP) in engagement with the saw blade (28);
**characterised in that** the outlet (44) is disposed to one side, in a direction of cutting of the blade, of a cut line (42) along which the blade (28) is arranged to cut when coupled to the output shaft (24), and comprises a nozzle (48) provided on a side face (43) of the housing.

2. A tool (10) according to claim 2, wherein the fan is disposed in the housing (16), and the housing (16) comprises an inlet (34) arranged to be in fluid communication with the fan such that air drawn into the inlet (34) passes over the motor.

3. A tool (10) according to claim 1 or 2, wherein during use the outlet (44) directs the stream of air to a portion of work-piece (WP) such that debris ejected by the saw blade (28) is entrained in the stream of air.

4. A tool (10) according to any preceding claim, wherein the outlet (44) is arranged to direct the stream of air at the work-piece (WP) at an angle of between 10° and 80° with respect to the cut line (42).

5. A tool (10) according to claim 4, wherein the angle is between 30° and 60°.

## Patentansprüche

1. Elektrisch angetriebenes, manuell betätigtes Werkzeug (10), das Folgendes umfasst:
einen Motor zum Antreiben einer Ausgangswelle (24), mit der ein Sägeblatt (28) verbunden werden kann,
ein Gehäuse (16) zum Aufnehmen des Motors,
eine Grundplatte (20), die am Gehäuse (16) befestigt ist, wobei die Grundplatte (20) eine Fläche (22) um-fasst, die für den Kontakt mit einem Werkstück (WP) während des Gebrauchs angeordnet ist, und
eine Öffnung (30), durch welche das Sägeblatt (28) für den Eingriff in das Werkstück (WP) laufen kann,
ein Lüfter, der zum Antrieb durch den Motor ausgelegt ist, um einen Luftstrom bereitzustellen, und
einen Auslass (44), durch welchen ein Teil des Luftstroms strömen kann, wobei der Auslass (44) in Fluidverbindung mit dem Lüfter über ein Rohr (40) steht;
wobei der Auslass (44) auf dem Gehäuse (16) angeordnet ist, um so den Luftstrom während des Gebrauchs auf einen Teil des Werkstücks (WP) im Eingriff mit dem Sägeblatt (28) zu lenken;
**dadurch gekennzeichnet, dass** der Auslass (44) auf einer Seite, in einer Richtung des Schneidens des Blattes, einer Schnittlinie (42) angeordnet ist, entlang der das Blatt (28) zum Schneiden ausgelegt ist, wenn es mit der Ausgangswelle (24) verbunden ist, und eine Düse (48) umfasst, die an einer Seitenfläche (43) des Gehäuses vorgesehen ist.

2. Werkzeug (10) nach Anspruch 1, wobei der Lüfter im Gehäuse (16) angeordnet ist und das Gehäuse (16) einen Einlass (34) umfasst, der für die Fluidverbindung mit dem Lüfter derart ausgelegt ist, dass Luft, die in den Einlass (34) eingesaugt ist, über den Motor strömt.

3. Werkzeug (10) nach Anspruch 1 oder 2, wobei während des Gebrauchs der Auslass (44) den Luftstrom auf einen Teil des Werkstücks (WP) derart lenkt, dass Abfälle, die vom Sägeblatt (28) ausgeworfen werden, im Luftstrom mitgenommen werden.

4. Werkzeug (10) nach einem der vorherigen Ansprüche, wobei der Auslass (44) zum Lenken des Luftstroms am Werkstück (WP) unter einem Winkel zwischen 10° und 80°gegenüber der Schnittlinie (42) ausgelegt ist.

5. Werkzeug (10) nach Anspruch 4, wobei der Winkel zwischen 30° und 60°beträgt.

## Revendications

1. Outil électrique (10) à commande manuelle, comprenant :
un moteur pour entraîner un arbre de sortie (24) auquel une lame de scie (28) peut être couplée,
un boîtier (16) pour loger le moteur,
une plaque de base (20) fixée au boîtier (16), ladite plaque de base (20) comprenant une surface (22) aménagée pour venir en contact avec une pièce (WP) en cours d'usage, et
une ouverture (30) à travers laquelle la lame de scie (28) peut passer pour s'engager sur la pièce (WP),
un ventilateur aménagé pour être entraîné par le moteur afin de fournir un courant d'air, et
une sortie (44) à travers laquelle une partie du courant d'air peut passer, la sortie (44) étant en communication de fluide avec le ventilateur via un conduit (40) ;
dans lequel ladite sortie (44) est disposée sur le boîtier (16) de manière à diriger le courant d'air en cours d'usage sur une partie de la pièce (WP) en engagement avec la lame de scie (28) ;
**caractérisé en ce que** la sortie (44) est disposée sur un côté, dans le sens de coupe de la lame, d'une ligne de coupe (42) le long de laquelle la lame (28) est aménagée pour couper lorsqu'elle est couplée à l'arbre de sortie (24), et comprend une buse (48) ménagée sur une face latérale (43) du boîtier.

2. Outil (10) selon la revendication 1, dans lequel le ventilateur est disposé dans le boîtier (16) et le boîtier (16) comprend une entrée (34) ménagée pour être en communication de fluide avec le ventilateur de sorte que l'air aspiré dans l'entrée (34) passe sur le moteur.

3. Outil (10) selon la revendication 1 ou la revendication 2, dans lequel, en cours d'usage, la sortie (44) dirige le courant d'air vers une partie de la pièce (WP) de sorte que les débris éjectés par la lame de scie (28) soient entraînés dans le courant d'air.

4. Outil (10) selon l'une quelconque des revendications précédentes, dans lequel la sortie (44) est aménagée pour diriger le courant d'air sur la pièce (WP) sous un angle compris entre 10 ° et 80 ° par rapport à la ligne de coupe (42).

5. Outil (10) selon la revendication 4, dans lequel l'angle se situe entre 30 ° et 60 °.
